# EUROPÄISCHE PATENTSCHRIFT

(11) **EP 0 441 746 B1**
(45) Veröffentlichungstag und Bekanntmachung des Hinweises auf die Patenterteilung: **21.06.1995**
(21) Anmeldenummer: 91810065.2
(22) Anmeldetag: 29.01.1991
(51) Int. Cl.: C08L 27/12, C08L 33/00, C08L 83/00

(54) **Lichtstabilisierte Bindemittel für Lacke**
Light-stabilised binding agent for coatings
Liants stabilisés à la lumière pour revêtements

(30) Priorität: 06.02.1990 CH 377/90
(43) Veröffentlichungstag der Anmeldung: 14.08.1991
(73) Patentinhaber: CIBA-GEIGY AG, 4002 Basel (CH)
(72) Erfinder: Valet, Anreas, Dr., W-7859 Eimeldingen (DE); Meuwly, Roger, Dr., CH-1762 Givisiez (CH); Slongo, Mario, Dr., CH-1712 Tafers (CH)

(56) Entgegenhaltungen:
- EP-A- 0 133 164
- EP-A- 0 149 696
- EP-A- 0 283 166

## Beschreibung

Die Erfindung betrifft ein Gemisch Von zwei Copolymeren und mindestens einem Härter. Das eine Copolymere enthält Fluor oder Silizium und einen UV-Absorber in copolymerisierter Form. Das andere Copolymere ist ein Acrylharz. Das Gemisch ist als Bindemittel für witterungsbeständige Lacke verwendbar.

Für Lacke im Aussensektor werden als Bindemittel häufig Acrylharze verwendet, weil diese relativ witterungsbeständig sind. Dabei handelt es sich im allgemeinen um Copolymere verschiedener Acryl- oder Methacrylsäurederivate. Zur Steigerung der Witterungsbeständigkeit kann man Lichtschutzmittel zusetzen, wie z.B. UV-Absorber oder sterisch gehinderte Amine oder beides (siehe z.B. US-A-4 314 933).

Neuerdings sind auch fluorhaltige Bindemittel für Lacke bekanntgeworden, beispielsweise Copolymere von Chlortrifluorethylen mit Vinylethern . Diese Entwicklungen sind z.B. in Progress in Organic Coatings 16 (1988), 113-134, beschrieben (siehe auch US-A-4 576 977). Lacke auf Basis solcher Fluorharze haben nicht nur hohe Witterungsbeständigkeit, sondern auch hohen Glanz und Schmutzabweisung. Ihr Nachteil ist der hohe Preis von fluororganischen Materialien. Aehnliches gilt für siliziumhaltige Bindemittel, wie z.B. Siliconharze.

Es wurde daher schon der Vorschlag gemacht, solche Fluor oder Silizium enthaltende Copolymere mit Acrylharzen zu vermischen, wobei das Acrylharz eine höhere Löslichkeit in Lösungsmitteln besitzt als das F bzw. Si enthaltende Copolymer (GB-A-2 192 399).

Es wurde nunmehr gefunden, dass man die Witterungsbeständigkeit solcher Bindemittel-Systeme noch erheblich steigern kann, wenn man dem F bzw. Si enthaltenden Copolymer einen UV-Absorber durch Copolymerisation einverleibt.

Die Erfindung betrifft daher eine Zusammensetzung aus (a) einem Fluor oder Silizium enthaltenden Copolymer, (b) einem (Meth)Acryl-Copolymer, und (c) mindestens einem Härter, wobei jedes der beiden Copolymere funktionelle Gruppen enthält, die mit dem Härter reagieren können, und die dadurch gekennzeichnet ist, dass die Komponente (a) einen UV-Absorber in copolymerisierter Form enthält.

Beispiele für geeignete funktionelle Gruppen sind Hydroxyl-, Carboxyl-, Anhydrid- oder Epoxidgruppen. Bevorzugt enthalten beide Copolymere als funktionelle Gruppen Hydroxylgruppen und ist der Härter eine Verbindung, die mit Hydroxylgruppen reagieren kann.

Bevorzugt sind Zusammensetzungen, worin der Löslichkeitsparameter nach K.W. Suh und J.M. Corbett (J. Appl. Pol. Sci. 12 (1968), 2359) sowohl der Komponente (b) wie der Komponente (c) um mindestens 0,5 grösser ist als der Löslichkeitsparameter der Komponente (a).

Das Copolymere (a) enthält entweder eine fluororganische Komponente oder eine siliziumorganische Komponente in copolymerisierter Form.

Wenn es eine fluororganische Komponente enthält, so ist (a) vorzugsweise ein Copolymer aus
(a₁) einem Polyfluorolefin,
(a₂) mindestens einem Alkyl- und/oder Cycloalkyl-vinylether,
(a₃) einem Hydroxyalkyl-vinylether,
(a₄) einem ethylenisch ungesättigten Derivat eines UV-Absorbers aus der Klasse der 2-(2-Hydroxyphenyl)-benztriazole, der o-Hydroxyphenyl-s-triazine, der o-Hydroxybenzophenone oder der Oxalanilide und
(a₅) gegebenenfalls weiteren copolymerisierbaren Verbindungen.

Beispiele für Polyfluorolefine sind 1,1-Difluorethylen, Tetrafluorethylen oder Hexafluorpropylen, insbesondere aber Chlortrifluorethylen. Bevorzugt enthält das Copolymer (a) mindestens 30 Gew.-% Chlortrifluorethylen.

Beispiele für Alkyl-vinylether sind Methyl-, Ethyl-, Propyl-, Isopropyl-, Butyl-, Hexyl- oder Octyl-vinylether.

Ein Beispiel für Cycloalkyl-vinylether ist der Cyclohexyl-vinylether.

Beispiele für Hydroxyalkyl-vinylether sind der 2-Hydroxypropyl-, 3-Hydroxybutyl- oder 4-Hydroxypentyl-vinylether.

Beispiele für copolymerisierbare Derivate von 2-(2-Hydroxyphenyl)-benztriazolen sind die Verbindungen der folgenden Formel 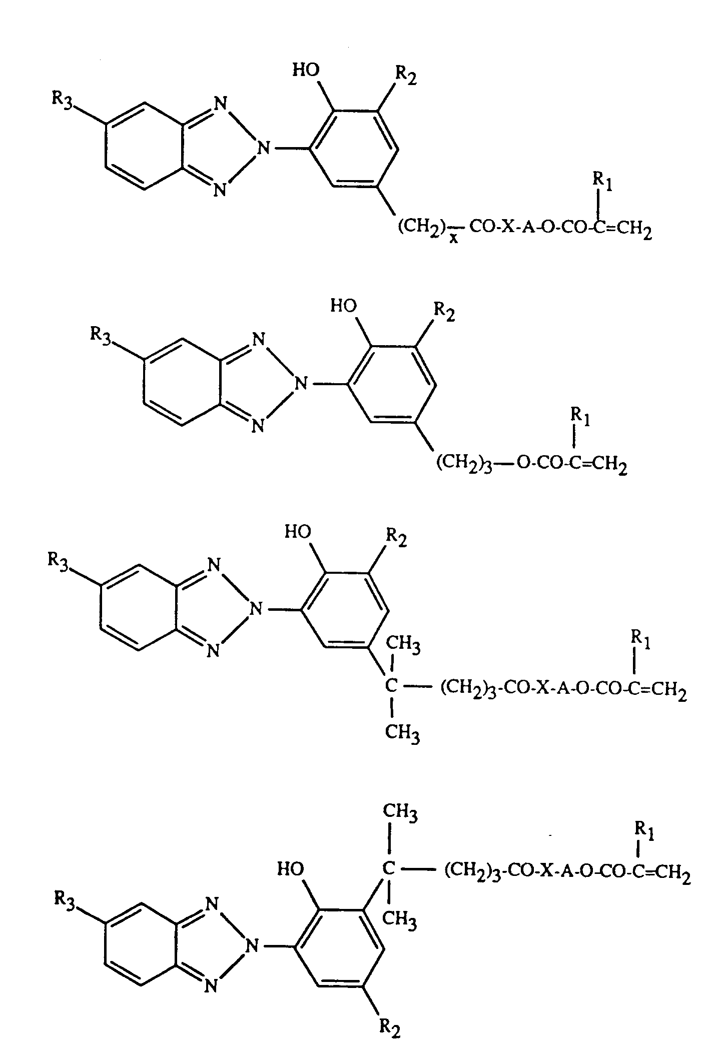 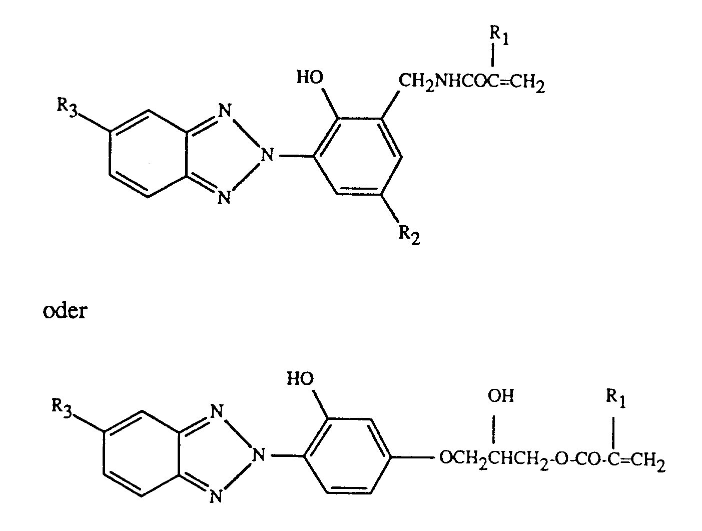
worin x 0-3 ist, R₁ H oder CH₃ ist, R₂ H, Cl, C₁-C₈-Alkyl, C₃-C₈-Alkenyl oder C₃-C₇-Aralkyl bedeutet, R₃ H, Cl, C₁-C₄-Alkyl oder C₁-C₄-Alkoxy bedeutet, X -O- oder -NH- und A C₂-C₈-Alkylen, 2-Hydroxytrimethylen oder Cyclohexylen bedeutet.

Beispiele hierfür sind die Verbindungen der folgenden Formeln:

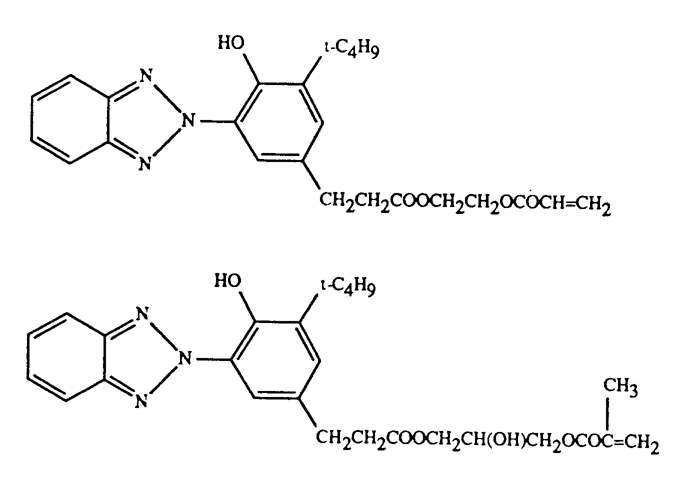

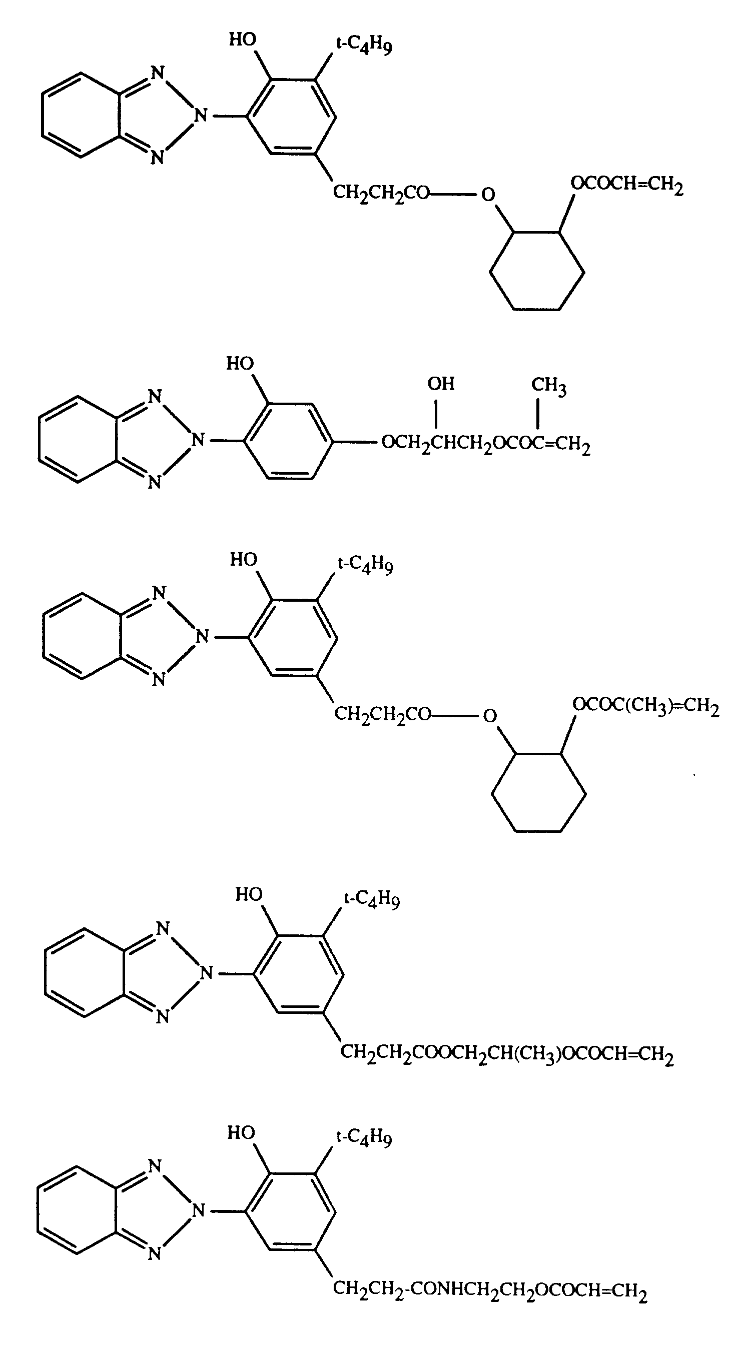

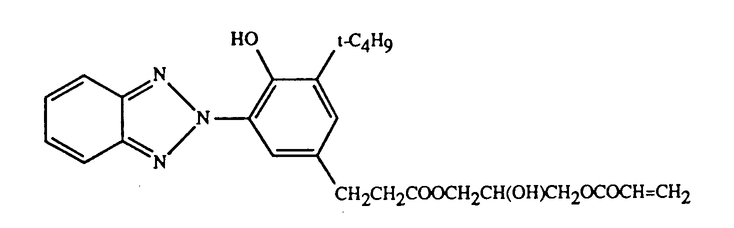

Beispiele für copolymerisierbare Derivate von o-Hydroxyphenyl-s-triazinen sind die Verbindungen der Formel 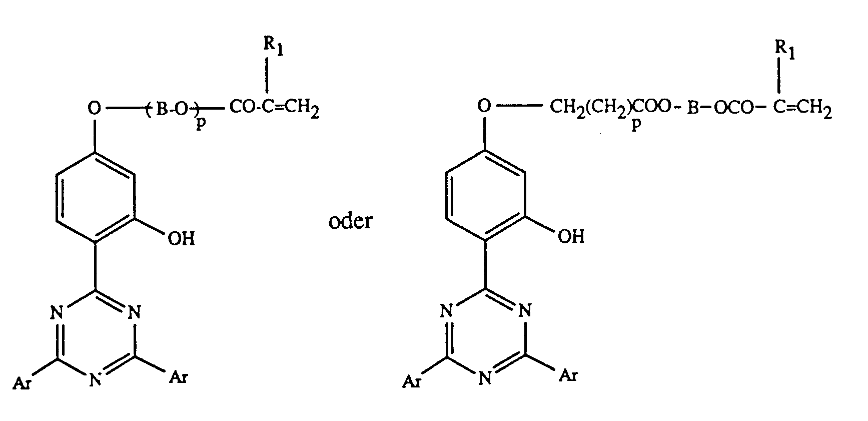
worin p 0 oder 1 ist, R₁ H oder CH₃ ist, Ar Phenyl oder durch C₁-C₄-Alkyl oder/und Cl substituiertes Phenyl bedeutet und B C₂-C₈-Alkylen, Cyclohexylen oder -CH₂CH(OH)CH₂- bedeutet.

Beispiele hierfür sind:
2,4-Diphenyl-6-(2-hydroxy-4-acryloyloxyethoxy-phenyl)-s-triazin,
2,4-Di(2,4-dimethylphenyl)-6-(2-hydroxy-4-acryloyloxyethoxy-phenyl)-s-triazin,
2,4-Di(2,4-dimethylphenyl)-6-(2-hydroxy-4-[2-hydroxy-3-methacryloyloxypropyloxy]-phenyl)-s-triazin,
2,4-Di(2,4-dimethylphenyl)-6-(2-hydroxy-4-methacryloyloxyphenyl)-s-triazin.

Beispiele für copolymerisierbare o-Hydroxybenzophenone sind die Verbindungen der Formel 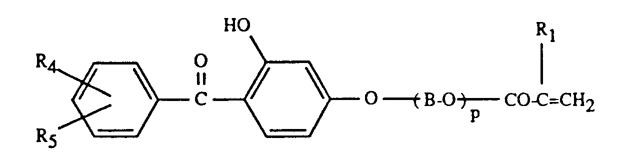
worin p 0 oder 1 ist, B C₂-C₈-Alkylen, Cyclohexylen oder -CH₂CH(OH)CH₂- bedeutet, R₁ H oder CH₃ ist und R₄ und R₅ unabhängig voneinander H, C₁-C₄-Alkyl, OH oder C₁-C₄-Alkoxy bedeuten.

Beispiele hierfür sind:
2-Hydroxy-4-acryloyloxybenzophenon,
2-Hydroxy-4-methacryloyloxybenzophenon,
2-Hydroxy-4-(2-acryloyloxypropyloxy)-benzophenon,
2-Hydroxy-4-(2-hydroxy-3-acryloyloxypropyloxy)-benzophenon,
2,2'-Dihydroxy-4-(2-methacryloyloxyethyloxy)-benzophenon,
2-Hydroxy-4-(2-acryloyloxyethoxy)-benzophenon
Beispiele für copolymerisierbare Oxalamide sind die Verbindungen der Formel 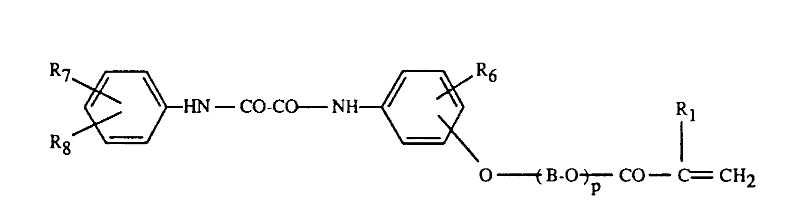
worin p 0 oder 1 ist, B C₂-C₈-Alkylen oder -CH₂CH(OH)CH₂- bedeutet, R₁ H oder CH₃ ist und R₆, R₇ und R₈ unabhängig voneinander H, C₁-C₁₂-Alkyl oder C₁-C₁₂-Alkoxy bedeuten.

Beispiele hierfür sind:
N-Phenyl-N'-(2-acryloyloxyphenyl)-oxalamid,
N-p-Tolyl-N'-(2-acryloyloxyphenyl)-oxalamid,
N-p-Methoxyphenyl-N'-(2-acryloyloxyphenyl)-oxalamid,
N-p-Methoxyphenyl-N'-[4-(2-acryloyloxyethoxy)-phenyl]-oxalamid,
N-p-Methoxyphenyl-N'-[2-(2-methacryloyloxypropoxy)-phenyl]-oxalamid,
N-Phenyl-N'-[4-(2-hydroxy-3-acryloyloxypropoxy)-phenyl]-oxalamid,
N-p-Methoxy-N'-[2-(2-hydroxy-3-methacryloyloxypropoxy)-phenyl]-oxalamid,
N-o-Ethylphenyl-N'-[2-(2-acryloyloxyethoxy)phenyl]-oxalamid
Bevorzugt ist die Komponente (a₄) ein Derivat des 2-(2-Hydroxyphenyl)-benztriazols oder des o-Hydroxyphenyl-s-triazins.

Beispiele von weiteren copolymerisierbaren Verbindungen (Komponente a₅) sind Styrol, α-Methylstyrol, Acryl- und Methacrylsäure und deren Alkylester, Acrylnitril, Maleinsäuremono- oder dialkylester oder Maleinsäureimide. Das Copolymer kann als weitere copolymerisierbare Verbindung (a₅) auch ein copolymerisierbares sterisch gehindertes Amin enthalten. Beispiele von hierfür geeigneten sterisch gehinderten Aminen sind 2,2,6,6-Tetramethylpiperidin-4-acrylat oder -methacrylat und 1,2,2,6,6-Pentamethylpiperidin-4-acrylat oder -methacrylat.

Die Komponente (a₁) ist vorzugsweise Chlortrifluorethylen und dessen Gehalt im Copolymeren (a) beträgt vorzugsweise mindestens 30 Gew.-%.

Vorzugsweise besteht das fluorhaltige Copolymere a) aus 30-60 Gew.-% der Komponente (a₁), 20-50 Gew.-% der Komponente (a₂), 5-20 Gew.-% der Komponente (a₃), 0,5-10 Gew.-% der Komponente (a₄) und 0-15 Gew.-% der Komponente (a₅).

Wenn das Copolymere (a) eine siliziumorganische Komponente enthält, so ist (a) vorzugsweise ein Copolymer aus
(a₁) einer ethylenisch ungesättigten Organosiliziumverbindung,
(a₂) mindestens einem Alkyl- acrylat oder -methacrylat,
(a₃) einem Hydroxyalkyl(meth)acrylat,
(a₄) einem ethylenisch ungesättigten Derivat eines UV-Absorbers aus der Klasse der 2-(2-Hydroxyphenyl)benztriazole, der o-Hydroxyphenyl-s-triazine, der o-Hydroxybenzophenone oder der Oxalanilide und
(a₅) gegebenenfalls weiteren copolymerisierbaren Verbindungen.

Ethylenisch ungesättigte Organosiliziumverbindungen sind z.B. Vinylsiliziumverbindungen, Allylsiliziumverbindungen oder Silizium enthaltende (Meth)acrylate. Bevorzugt verwendet man als Komponente (a₁) eine Verbindung der Formel 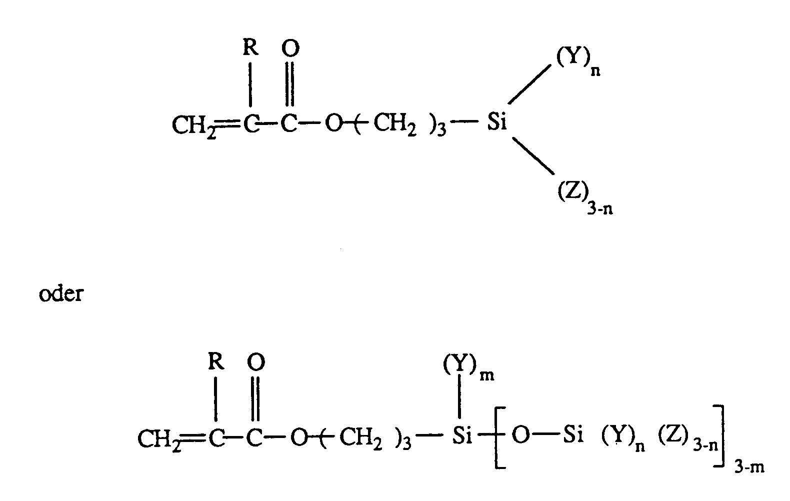
worin n 0-3, m 0-3, R H oder CH₃, Y C₁-C₈-Alkyl und Z C₁-C₈-Alkoxy oder -OCH₂CH₂OCH₃ bedeuten. Beispiele solcher Verbindungen sind:
1-[Dimethyl-(3-acryloyloxypropyl)]-3-trimethyldisiloxan,
1-[Dimethyl-(3-methacryloyloxypropyl)]-3-trimethyldisiloxan,
3-Methacryloyloxypropyl-3-trimethoxysilan,
3-Methacryloyloxypropyl-tris(trimethylsiloxy)silan.

Die als Komponente (a₂) verwendeten Alkyl(meth)acrylate haben vorzugsweise einen Alkylrest mit 1-12, insbesondere 1-8 C-Atomen. Beispiele hierfür sind Methyl-, Ethyl-, Propyl-, Butyl-, Hexyl-, Octyl-, Decyl- oder Dodecyl-acrylat oder -methacrylat.

Die als Komponente (a₃) verwendeten Hydroxyalkyl(meth)acrylate haben vorzugsweise einen Hydroxyalkylrest mit 2-6 C-Atomen. Beispiele hierfür sind 2-Hydroxyethyl-, 2-Hydroxypropyl-, 2-Hydroxybutyl- oder 2-Hydroxyhexyl-acrylat oder -methacrylat.

Als UV-Absorber-Komponente (a₄) können dieselben Verbindungen verwendet werden wie für Fluor enthaltende Copolymere und wie sie vorher aufgeführt wurden. Auch hier sind die Derivate des 2-(2-Hydroxyphenyl)-benztriazols und des o-Hydroxyphenyl-s-triazins bevorzugt.

Als weitere copolymerisierbare Verbindungen (Komponente a₅) können z.B. Styrol, α-Methylstyrol, Acrylsäure, Methacrylsäure, Acrylnitril oder Ester der Maleinsäure verwendet werden. Das Copolymer kann als weitere copolymerisierbare Verbindung (a₅) auch ein copolymerisierbares sterisch gehindertes Amin enthalten. Beispiele von hierfür geeigneten sterisch gehinderten Aminen sind 2,2,6,6-Tetramethylpiperidin-4-acrylat oder -methacrylat und 1,2,2,6,6-Pentamethylpiperidin-4-acrylat oder -methacrylat.

Vorzugsweise besteht das siliziumhaltige Copolymere (a) aus 5-40 Gew.-% der Komponente (a₁), 30-70 Gew.-% der Komponente (a₂), 5-20 Gew.-% der Komponente (a₃), 0,5-10 Gew.-% der Komponente (a₄) und 0-30 Gew.-% der Komponente (a₅).

Die Komponente (b)ist ein (Meth)Acryl-Copolymer, wie es üblicherweise als Bindemittel für Lacke verwendet wird. Diese Copolymere werden auch Acrylharze genannt. Sie bestehen in der Hauptmenge aus einem oder mehreren Alkylacrylaten oder -methacrylaten und enthalten in kleinerer Menge ein funktionelles Acrylat oder Methacrylat. Das (Meth)Acryl-Copolymer enthält demnach funktionelle Gruppen, die mit einem geeigneten Härter unter Vernetzung reagieren können.

Solche Acrylharze sind in grosser Auswahl kommerziell verfügbar. Bevorzugt vewendet man ein Acrylharz, das ein Copolymer aus mehreren Alkylacrylaten oder -methacrylaten, einem Hydroxyalkyl(meth)acrylat und Acryl- oder Methacrylsäure ist.

Die Komponente (c) ist ein Härter, der mit den funktionellen Gruppen der Komponenten (a) und (b) reagieren kann. Vorzugsweise verwendet man hierfür ein Melaminharz oder ein Polyisocyanat oder ein Gemisch beider.

Die als Härter geeigneten Melaminharze sind vor allem N-Hydroxymethyl- und N-Alkoxymethylderivate des Melamins. Solche als Härter geeignete Melaminderivate sind im Handel erhältlich und werden üblicherweise zur Härtung von Acrylharzen verwendet

Als Härter geeignete Polyisocyanate sind vor allem Diisocyanate und Triisocyanate, wie z.B. Toluoldiisocyanat, Diphenylmethan-4,4'-diisocyanat, Hexamethylendiisocyanat oder Isophorondiisocyanat, sowie deren dimerisierte, trimerisierte oder verkappte Derivate.

Das Verhältnis von (a) zu (b) kann in weitem Bereich variiert werden. Vorzugsweise beträgt das Gewichtsverhältnis von (a):(b) 20:80 bis 80:20. Die Menge an Harter (c) richtet sich nach der Menge an funktionellen Gruppen in (a) und (b). Vorzugsweise verwendet man 3 bis 80 Gew.-Teile Härter auf 100 Teile der Summe von (a) und (b). In einer bevorzugten Ausführungsform besteht das erfindungsgemässe Gemisch aus 30-50 Gew.-% (a), 30-50 Gew.-% (b) und 10-25 Gew.-% (c).

Die erfindungsgemässen Zusammensetzungen können als Bindemittel führ witterungsbeständige Lacke verwendet werden. Im einfachsten Fall enthalten die Lacke eine erfindungsgemässe Zusammensetzung und ein Lösungsmittel. Die Lacke können Klarlacke oder pigmentierte Lacke sein. Als Pigmente können anorganische, organische oder metallische Pigmente verwendet werden. Durch Zusatz von Lösungsmitteln oder Verdickungsmitteln kann die Viskosität der Lacke reguliert werden. Die Lacke können weitere Zusätze enthalten, wie z.B. Füllstoffe, Weichmacher, Verlaufhilfsmittel, Haftverbesserer, Härtungsbeschleuniger, Antioxidantien oder Lichtschutzmittel. Von besonderer Bedeutung ist der Zusatz von Lichtschutzmitteln aus der Klasse der sterisch gehinderten Amine, da diese mit dem eingebauten UV-Absorber des Bindemittels eine synergistische Steigerung der Witterungsbeständigkeit bewirken können. Beispiele für sterisch gehinderte Amine sind vor allem Derivate des 2,2,6,6-Tetramethylpiperidins, wie sie z.B in Kunststoffe 77 (1987) 1065-69 oder in der EP-A-15652 auf Seite 5-17, beschrieben sind.

Je nach dem verwendeten Härter können diese Lacke bei Raumtemperatur oder bei erhöhter Temperatur gehärtet werden. In jedem Fall wird die Härtung durch Erwärmen (Einbrennen) beschleunigt. Eine Beschleunigung kann auch durch Zusatz von Härtungskatalysatoren bewirkt werden. So kann z.B. die Härtung mit Isocyanaten durch zinnorganische Verbindungen oder durch basische Katalysatoren (z.B. tertiäre Amine) beschleunigt werden. Die Härtung mit Melaminharzen kann durch saure Katalysatoren beschleunigt werden, beispielsweise durch Zusatz von Toluolsulfonsäure.

Die geharteten Lacke zeichnen sich nicht nur durch hohe Witterungsbeständigkeit, sondern auch durch hohen Glanz aus. Als Substrate können die üblichen Unterlagen, wie Metall, Holz, keramische Materialien oder Kunststoffe dienen. Bei mehrschichtigen Anstrichen verwendet man die Lacke mit den erfindungsgemässen Bindemitteln vorzugsweise als Deckschicht, da sie die Einstrahlung des UV-Lichtes abschirmen. Die gehärteten Lackfilme sind ebenfalls Gegenstand der Erfindung.

Die folgenden Beispiele beschreiben die Ausführung der Erfindung im Detail. Teile bedeuten darin Gewichtsteile, Prozente bedeuten Gewichtsprozente.

### Beispiele

### Beispiel 1: Herstellung eines fluorhaltigen Copolymeren

In einem 400 ml-Autoklav mit Rührer löst man unter Stickstoff 25,24 g Cyclohexyl-vinylether, 14,42 g Ethyl-vinylether, 11,61 g Hydroxybutyl-vinylether und 5,73 g des UV-Absorbers UV- 1 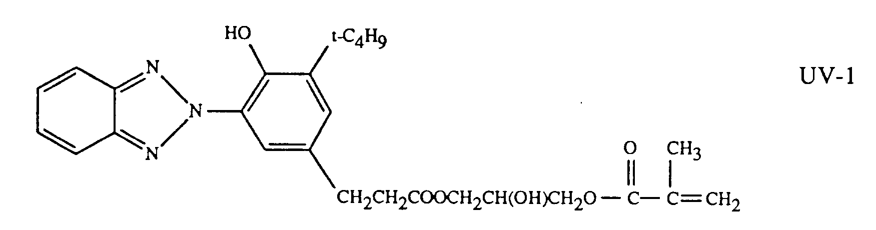
in 110 g tert.Butanol und gibt 2 g K₂CO₃ und 0,1 g Azoisobutyronitril zu. Zur Entfernung von gelöster Luft verfestigt man die Lösung durch Kühlung mit flüssigem Stickstoff. Nach Erwärmen auf Raumtemperatur gibt man 58,24 g Chlortrifluorethylen zu, schliesst den Autoklav und erwärmt ihn langsam unter Rühren auf 65°C. Diese Temperatur hält man 7 h und kühlt dann auf Raumtemperatur ab. Die erhaltene Lösung wird in Wasser gegossen, wobei das feste Copolymere ausfällt. Es wird mit Wasser gewaschen und getrocknet. Die Grenzviskosität [η] des Copolymeren beträgt 0,30 dl/g. Gemäss Elementaranalyse enthält das Copolymere 5 % des UV-Absorbers.

### Beispiel 2: Das Beispiel 1 wird wiederholt, wobei jedoch als UV-Absorber 5,73 g der Verbindung UV-2

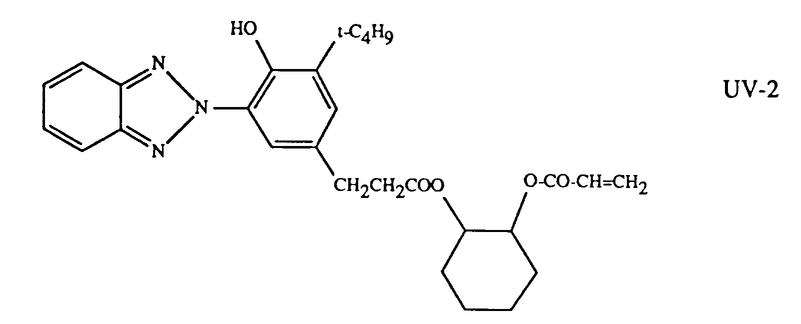

verwendet werden.

Das erhaltene Copolymer enthält 5 % UV-Absorber.

### Beispiel 3: Das Beispiel 1 wird wiederholt, wobei jedoch als UV-Absorber 5,73 g der Verbindung UV-3

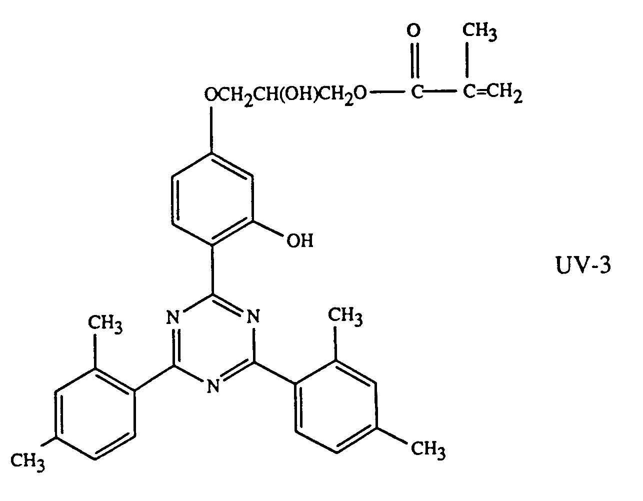

verwendet werden. Das erhaltene Copolymer enthält 5 % UV-Absorber.

### Beispiel 4: Das Beispiel 1 wird wiederholt, wobei jedoch als UV-Absorber 5,73 g der Verbindung UV-4

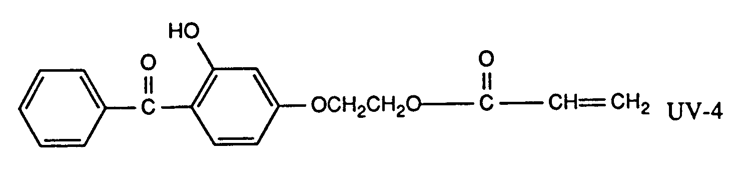

verwendet werden. Das erhaltene Copolymer enthält 5 % UV-Absorber.

### Beispiel 5: Das Beispiel 1 wird wiederholt, wobei jedoch als UV-Absorber 5,73 g der Verbindung UV-5

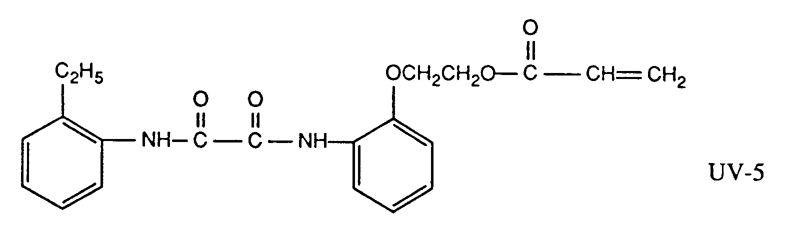

verwendet werden. Das erhaltene Copolymer enthält 5 % UV-Absorber.

### Beispiel 6: Herstellung eines siliziumhaltigen Copolymers

Eine Mischung von 90 g Xylol und 10 g 4-Methyl-2-pentanon wird auf 105°C erwärmt. Bei dieser Temperatur wird ein Gemisch aus 10 g 3-Methacryloyloxypropyl-pentamethyldisiloxan, 16,9 g Styrol, 7,3 g Methylmethacrylat, 46,5 g 2-Ethylhexyl-methacrylat, 16,2 g 2-Hydroxyethyl-methacrylat, 3,1 g Methacrylsäure, 5,2 g des UV-Absorbers UV-1 und 0,7 g Azoisobutyronitril innerhalb 4 h zugetropft. Anschliessend wird 2 h bei dieser Temperatur gerührt. Man erhält eine ca 50 %ige Lösung des Copolymeren. Das Copolymer enthält 5 % UV-Absorber in copolymerisierter Form.

### Beispiel 7: Das Beispiel 6 wird wiederholt, wobei jedoch als UV-Absorber 5,2 g der Verbindung UV-3 verwendet werden. Das erhaltene Copolymer enthält 5 % UV-Absorber.

### Beispiel 8: Das Beispiel 6 wird wiederholt, wobei jedoch als UV-Absorber 5,2 g der Verbindung UV-4 verwendet werden. Das erhaltene Copolymer enhält 5 % UV-Absorber.

### Beispiel 9: Das Beispiel 6 wird wiederholt, wobei jedoch als UV-Absorber 5,2 g der Verbindung UV-5 verwendet werden. Das erhaltene Copolymer enthält 5 % UV-Absorber.

### Beispiel 10: Bereitung von Klarlacken mit Melamin-Härter

Es werden Gemische bereitet aus 19,5 Teilen eines Fluor und UV-Absorber enthaltenden Copolymers (Produkt des Beispiels 1), 19,5 Teilen eines Acrylharzes (Copolymerisat aus 31 % Ethylacrylat, 29,5 % Methylmethacrylat, 20,2 % 2-Ethylhexyl-methacrylat, 16,2 % 2-Hydroxyethyl-methacrylat und 3,1 % Methacrylsäure) und 9,8 Teilen eines Melaminharzes (Cymel® 1130, Cyanamid Corp.) als Härter. Die Mischungen enthalten ca. 2 % UV-Absorber, bezogen auf Festkörper. Sie werden mit Xylol auf Spritzfähigkeit verdünnt und auf mit einem Silbermetallic-Basislack lackierte Aluminiumbleche aufgebracht. Die Proben werden 15 Minuten bei Raumtemperatur gelagert und dann 30 Minuten bei 130°C eingebrannt. Es resultiert ein 40-45 »m dicker Lackfilm.

Als Vergleich dient eine Klarlackformulierung, deren F-haltiges Copolymer wie in Beispiel 1, jedoch ohne UV-Absorber, hergestellt wurde, sowie dieselbe Formulierung, der 2 % (bezogen auf Festkörper) von UV- 1 zugemischt wurde. Formulierung des Lackes und Bereitung der Vergleichsproben geschieht wie oben beschrieben.

Die gehärteten Proben werden sowohl in einem Schnellbewitterungsgerät UVCON (UVB-313-Lampen) als auch im Xenon-Weatherometer (CAM 159, KFA-Methode) geprüft. Als Kriterium der Schädigung wird der 60°-Glanz nach DIN 67530 gemessen.

**Tabelle 1**

| UVCON-Bewitterung (8 h UV bei 70°C/4 h Kondensation bei 50°C) | | | | |
|---|---|---|---|---|
| Stabilisator | 60°-Glanz (in%) nach | | | |
| | 0 | 400 | 1200 | 1600 h |
| keiner | 87 | 40 | 15 | - |
| 2 % UV-1 eingebaut (Copolymer aus Bsp. 1) | 94 | 84 | 54 | 37 |
| 2 % UV-1 zugesetzt | 87 | 64 | 25 | 20 |

**Tabelle 2**

| Xenon-Weatherometer | |
|---|---|
| Stabilisator | 60°-Glanz (%) nach 800 h |
| keiner | 18 |
| 2 % UV-1 eingebaut (Copolymer aus Bsp. 1) | 49 |
| 2 % UV-1 zugesetzt | 18 |

### Beispiel 11: Das Beispiel 10 wird wiederholt, jedoch werden 19,5 Teile des Copolymers von Beispiel 3 anstelle des Copolymers von Beispiel 1 verwendet. Der Klarlack enthält ca. 2 % UV-3, bezogen auf Festkörper.

Die Bereitung der Proben geschieht wie in Beispiel 10, die Prüfung erfolgt im Xenon-Weatherometer CAM 159 und Messung des 60°-Glanzes nach DIN 67530.

**Tabelle 3**

| Xenon-Weatherometer | |
|---|---|
| Stabilisator | 60°-Glanz (%) nach 800 h |
| keiner | 18 |
| 2 % UV-3 eingebaut (Copolymer aus Bsp. 3) | 42 |
| 2 % UV-3 zugesetzt | 19 |

### Beispiel 12: Es werden Gemische bereitet aus 19,5 Teilen des siliziumhaltigen Copolymers von Beispiel 6, 19,5 Teile des Acrylharzes, das in Beispiel 10 verwendet wurde, und 9,8 Teile Melaminharz (Cymel® 1130) als Härter. Die Mischungen enthalten ca. 2 % UV-Absorber, bezogen auf Festkörper.

Zum Vergleich wird eine Mischung bereitet unter Verwendung eines siliziumhaltigen Copolymers, das keinen UV-Absorber als Comonomer enthält, jedoch sonst wie in Beispiel 6 hergestellt wurde.

Die Bereitung der Proben und deren Prüfung geschieht wie in Beispiel 10 beschrieben. Die Ergebnisse sind in Tabelle 4 aufgeführt.

**Tabelle 4**

| Bewitterung im Xenon-Weatherometer | |
|---|---|
| Stabilisator | 60°-Glanz (%) nach 2000 h |
| keiner | 40 |
| 2 % UV-1 eingebaut (Copolymer aus Bsp. 6) | 52 |
| 2 % UV-3 eingebaut (Copolymer aus Bsp. 7) | 60 |

### Beispiel 13: Klarlack mit Isocyanat-Härter

Es werden Mischungen bereitet aus 19,5 Teilen der fluorhaltigen Copolymeren aus Beispiel 1 und 3, 19,5 Teilen des in Beispiel 10 beschriebenen Acrylharzes und 5,2 Teilen eines aliphatischen Triisocyanates (Desmodur® N 75, Bayer A.G.). Die Mischungen enthalten ca. 2,2 % UV-Absorber, bezogen auf den Festkörper.

Die Mischungen werden mit Xylol auf Spritzfähigkeit verdünnt und auf mit Silbermetallic-Basislack lackierte Aluminiumbleche aufgetragen. Die Proben werden 15 Minuten bei Raumtemperatur abgelüftet und dann 45 Minuten bei 80°C gehärtet. Es resultiert ein 40-45 »m dicker Lackfilm.

Als Vergleich dient eine Lackformulierung, deren F-haltiges Copolymer wie in Beispiel 1, jedoch ohne UV-Absorber-Comonomer hergestellt wurde. Ausserdem werden dieser Vergleichsformulierung einmal 2,2 % UV-1 und einmal 2,2 % UV-3 zugemischt. Die Ergebnisse nach 1200 h Bewitterung der Proben im UVCON (8 h Belichtung bei 70°C, 4 h Kondensation bei 50°C) zeigt die Tabelle 5.

**Tabelle 5**

| UVCON-Bewitterung | |
|---|---|
| Stabilisator | 60°-Glanz (%) nach 1200 h |
| keiner | 9 |
| 2,2 % UV-1 eingebaut (Copolymer aus Bsp. 1) | 78 |
| 2,2 % UV-1 zugesetzt | 46 |
| 2,2 % UV-3 eingebaut (Copolymer aus Bsp. 3) | 63 |
| 2,2 % UV-3 zugesetzt | 16 |

### Beispiel 14: Es wird eine Mischung bereitet aus 19,5 Teilen des Si-haltigen Copolymeren des Beispiels 7, 19,5 Teilen des in Beispiel 10 verwendeten Acrylharzes und 5,2 Teilen Desmodur® N75. Die Mischung enhält ca. 2,2 % UV-3 in copolymerisierter Form.

In gleicher Weise wird eine Mischung bereitet, deren Si-haltiges Copolymer wie in Beispiel 7, jedoch ohne UV-Absorber-Comonomer hergestellt wurde. Diese Mischung wird einmal ohne Zusatz und einmal unter Zusatz von 2,2 % UV-3 (bezogen auf den Festkörper) verwendet.

Die Bereitung der Proben und ihre Prüfung im UVCON-Gerät (8 h Belichtung bei 70°C, 4 h Kondensation bei 50°C) geschieht wie in Beispiel 10 beschrieben. Die Ergebnisse sind in Tabelle 6 aufgeführt.

**Tabelle 6**

| UVCON-Bewitterung | |
|---|---|
| Stabilisator | 60°-Glanz (%) nach 2000 h |
| keiner | 22 (Rissbildung) |
| 2,2 % UV-3 eingebaut (Copolymer aus Bsp. 7) | 47 |
| 2,2 % UV-3 zugesetzt | 24 |

## Patentansprüche

1. Härtbare Zusammensetzung enthaltend (a) ein Fluor oder Silizium enthaltendes Copolymer, (b) ein (Meth)Acryl-Copolymer, und (c) mindestens einen Härter, wobei jedes der beiden Copolymeren funktionelle Gruppen enthält, die mit dem Härter reagieren können und die dadurch gekennzeichnet ist, dass das Fluor oder Silizium enthaltende Copolymer einen UV-Absorber in copolymerisierter Form enthält

2. Zusammensetzung gemäss Anspruch 1, dadurch gekennzeichnet, dass die Copolymeren (a) und (b) Hydroxylgruppen enthalten und der Härter eine Verbindung ist, die mit Hydroxylgruppen reagieren kann.

3. Zusammensetzung gemäss Anspruch 1, dadurch gekennzeichnet, dass die Komponente (a) ein Fluor enthaltendes Copolymer ist.

4. Zusammensetzung gemäss Anspruch 1, dadurch gekennzeichnet, dass die Komponente
(a) ein Copolymer ist aus
(a₁) einem Polyfluorolefin,
(a₂) mindestens einem Alkyl- und/oder Cycloalkyl-vinylether,
(a₃) einem Hydroxyalkyl-vinylether,
(a₄) einem ethylenisch ungesättigten Derivat eines UV-Absorbers aus der Klasse der 2-(2-Hydroxyphenyl)-benztriazole, der o-Hydroxyphenyl-s-triazine, der o-Hydroxybenzophenone oder der Oxalanilide und
(a₅) gegebenenfalls weiteren copolymerisierbaren Verbindungen.

5. Zusammensetzung gemäss Anspruch 4, dadurch gekennzeichnet, dass die Komponente (a₁) Chlortrifluorethylen ist und dessen Gehalt im Copolymeren (a) mindestens 30 Gew.-% beträgt.

6. Zusammensetzung gemäss Anspruch 4, dadurch gekennzeichnet, dass die Komponente (a₄) ein Derivat des 2-(2-Hydroxyphenyl)-benztriazols oder des o-Hydroxyphenyl-s-triazins ist.

7. Zusammensetzung gemäss Anspruch 1, dadurch gekennzeichnet, dass die Komponente (a) ein Silizium enthaltendes Copolymer ist.

8. Zusammensetzung gemäss Anspruch 1, dadurch gekennzeichnet, dass die Komponente
(a) ein Copolymer ist aus
(a₁) einer ethylenisch ungesättigten Organosiliziumverbindung,
(a₂) mindestens einem Alkyl- acrylat oder -methacrylat,
(a₃) einem Hydroxyalkyl(meth)acrylat,
(a₄) einem ethylenisch ungesättigten Derivat eines UV-Absorbers aus der Klasse der 2-(2-Hydroxyphenyl)-benztriazole, der o-Hydroxyphenyl-s-triazine, der o-Hydroxybenzophenone oder der Oxalanilide und
(a₅) gegebenenfalls weiteren copolymerisierbaren Verbindungen.

9. Zusammensetzung gemäss Anspruch 8, dadurch gekennzeichnet, dass die Komponente (a₁) eine Verbindung der Formel 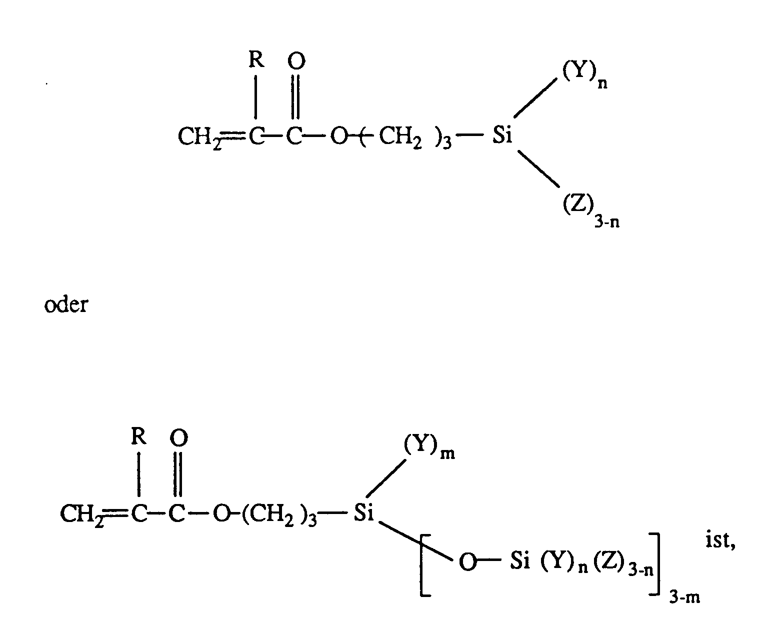 worin n 0-3, m 0-3, R Wassertoff oder CH₃, Y C₁-C₈-Alkyl und Z C₁-C₈-Alkoxy oder -OCH₂CH₂OCH₃ bedeuten.

10. Zusammensetzung gemäss Anspruch 8, dadurch gekennzeichnet, dass die Komponente (a₄) ein Derivat des 2-(2-Hydroxyphenyl)-benztriazols oder des o-Hydroxyphenyl-s-triazins ist.

11. Zusammensetzung gemäss Anspruch 1, dadurch gekennzeichnet, dass die Komponente (b) ein Copolymer aus mehreren Alkylacrylaten oder -methacrylaten, einem Hydroxyalkal(meth)acrylat und Acryl- oder Methacrylsäure ist.

12. Zusammensetzung gemäss Anspruch 1, dadurch gekennzeichnet, dass die Komponente (c) ein Melaminharz und/oder ein Polyisocyanat ist.

13. Zusammensetzung gemäss Anspruch 1, dadurch gekennzeichnet, dass das Gewichtsverhältnis von (a) zu (b) 20:80 bis 80:20 beträgt und das Gewichtsverhältnis von (c) zur Summe von (a) und (b) 3-80 zu 100 beträgt.

14. Zusammensetzung gemäss Anspruch 1, dadurch gekennzeichnet, dass das Copolymer (a) ein copolymerisierbares sterisch gehindertes Amin enthält.

15. Verwendung einer Zusammensetzung gemäss Anspruch 1 als Bindemittel für Klarlacke oder pigmentierte Lacke.

16. Klarer oder pigmentierter Lack, der als Bindemittel eine Zusammensetzung gemäss Anspruch 1 enthält.

17. Klarer oder pigmentierter Lack gemäss Anspruch 16, der ein Lichtschutzmittel aus der Klasse der sterisch gehinderten Amine enthält.

18. Klarer oder pigmentierter Lack gemäss Anspruch 17, der ein Derivat des 2,2,6,6-Tetramethylpiperidins enthält.

19. Gehärter Lackfilm, erhalten durch Härtung eines Lackes, der als Bindemittel eine Zusammensetzung gemäss Anspruch 1 enthält.

## Claims

1. A curable composition comprising (a) a fluorine- or silicon-containing copolymer, (b) a (meth)acrylic copolymer, and (c) at least one curing agent, each of which two said copolymers contains functional groups which are able to react with the curing agent, wherein the fluorine- or silicon-containing copolymer contains a UV absorber in copolymerized form.

2. A composition according to claim 1, wherein the copolymers (a) and (b) contain hydroxyl groups and the curing agent is a compound which is able to react with hydroxyl groups.

3. A composition according to claim 1, wherein component (a) is a fluorine-containing copolymer.

4. A composition according to claim 1, wherein component (a) is a copolymer of
(a₁) a polyfluoroolefin,
(a₂) at least one alkyl and/or cycloalkyl vinyl ether,
(a₃) a hydroxyalkyl vinyl ether,
(a₄) an ethylenically unsaturated derivative of a UV absorber from the class of the 2-(2-hydroxyphenyl)benzotriazoles, of the o-hydroxyphenyl-s-triazines, of the o-hydroxybenzophenones or of the oxalanilides, and
(a₅) further optional copolymerizable compounds.

5. A composition according to claim 4, wherein component (a₁) is chlorotrifluoroethylene and is present in the copolymer (a) in an amount of at least 30% by weight.

6. A composition according to claim 4, wherein component (a₄) is a derivative of 2-(2-hydroxyphenyl)benzotriazole or of o-hydroxyphenyl-s-triazine.

7. A composition according to claim 1, wherein component (a) is a silicon-containing copolymer.

8. A composition according to claim 1, wherein component (a) is a copolymer of
(a₁) an ethylenically unsaturated organosilicon compound,
(a₂) at least one alkyl acrylate or alkyl methacrylate,
(a₃) a hydroxyalkyl (meth)acrylate,
(a₄) an ethylenically unsaturated derivative of a UV-absorber from the class of the 2-(2-hydroxyphenyl)benzotriazoles, of the o-hydroxyphenyl-s-triazines, of the o-hydroxybenzophenones or of the oxalanilides, and
(a₅) further optional copolymerizable compounds.

9. A composition according to claim 8, wherein component (a₁) is a compound of formula 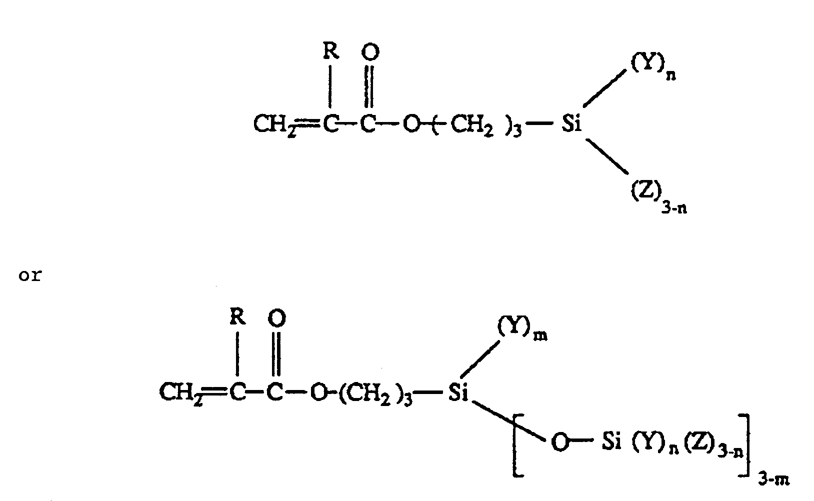 in which n is 0-3, m is 0-3, R is hydrogen or CH₃, Y is C₁-C₈alkyl and Z is C₁-C₈alkoxy or -OCH₂CH₂OCH₃.

10. A composition according to claim 8, wherein component (a₄) is a derivative of 2-(2-hydroxyphenyl)benzotriazole or of o-hydroxyphenyl-s-triazine.

11. A composition according to claim 1, wherein component (b) is a copolymer of two or more alkyl acrylates or alkyl methacrylates, a hydroxyalkyl (meth)acrylate and acrylic or methacrylic acid.

12. A composition according to claim 1, wherein component (c) is a melamine resin and/or a polyisocyanate.

13. A composition according to claim 1, wherein the weight ratio of (a) to (b) is 20:80 to 80:20, and the weight ratio of (c) to the sum of (a) and (b) is 3-80 to 100.

14. A composition according to claim 1, wherein the copolymer (a) contains a copolymerizable sterically hindered amine.

15. Use of a composition according to claim 1 as binder for clear or pigmented coating compositions.

16. A clear or pigmented coating composition which contains as binder a composition according to claim 1.

17. A clear or pigmented coating composition according to claim 16, which contains a light stabilizer from the class of the sterically hindered amines.

18. A clear or pigmented coating composition according to claim 17, which contains a derivative of 2,2,6,6-tetramethylpiperidine.

19. A cured coating film obtained by curing a coating composition which contains as binder a composition according to claim 1.

## Revendications

1. Composition durcissable contenant (a) un copolymère contenant du fluor ou du silicium, (b) un copolymère (méth)acrylique, et (c) au moins un durcisseur, chacun des deux copolymères contenant des groupes fonctionnels, qui peuvent réagir avec le durcisseur, **caractérisée** en ce que le copolymère contenant du fluor ou du silicium contient un absorbant UV sous une forme copolymérisée.

2. Composition selon la revendication 1, **caractérisée** en ce que les copolymères (a) et (b) contiennent des groupes hydroxyle et le durcisseur est un composé, qui peut réagir avec des groupes hydroxyle.

3. Composition selon la revendication 1, **caractérisée** en ce que le composant (a) est un copolymère contenant du fluor.

4. Composition selon la revendication 1, **caractérisée** en ce que le composant (a) est un copolymère de
(a₁) une polyfluoro-oléfine,
(a₂) au moins un alkyl- et/ou cycloalkyl-vinyléther,
(a₃) un hydroxyalkyl-vinyléther,
(a₄) un dérivé à insaturation éthylénique d'un absorbant UV de la classe des 2-(2-hydroxyphényl)-benzotriazoles, des o-hydroxyphényl-s-triazines, des o-hydroxy-benzophénones et des oxanilides et
(a₅) éventuellement d'autres composés copolymérisables.

5. Composition selon la revendication 4, **caractérisée** en ce que le composant (a₁) est le chlorotrifluoroéthylène et sa teneur dans le copolymère (a) est d'au moins 30 % en poids.

6. Composition selon la revendication 4, **caractérisée** en ce que le composant (a₄) est un dérivé du 2-(2-hydroxyphényl)-benzotriazole ou de la o-hydroxyphényl-s-triazine.

7. Composition selon la revendication 1, **caractérisée** en ce que le composant (a) est un copolymère contenant du silicium.

8. Composition selon la revendication 1, **caractérisée** en ce que le composant (a) est un copolymère de
(a₁) un composé organosilicié à insaturation éthylénique,
(a₂) au moins un alkyl-acrylate ou -méthacrylate,
(a₃) un hydroxyalkyl(méth)acrylate,
(a₄) un dérivé à insaturation éthylénique d'un absorbant UV de la classe des 2-(2-hydroxyphényl)-benzotriazoles, des o-hydroxyphényl-s-triazines, des o-hydroxy-benzophénones ou des oxanilides et
(a₅) éventuellement d'autres composés copolymérisables.

9. Composition selon la revendication 8, **caractérisée** en ce que le composant (a₁) est un composé de formule 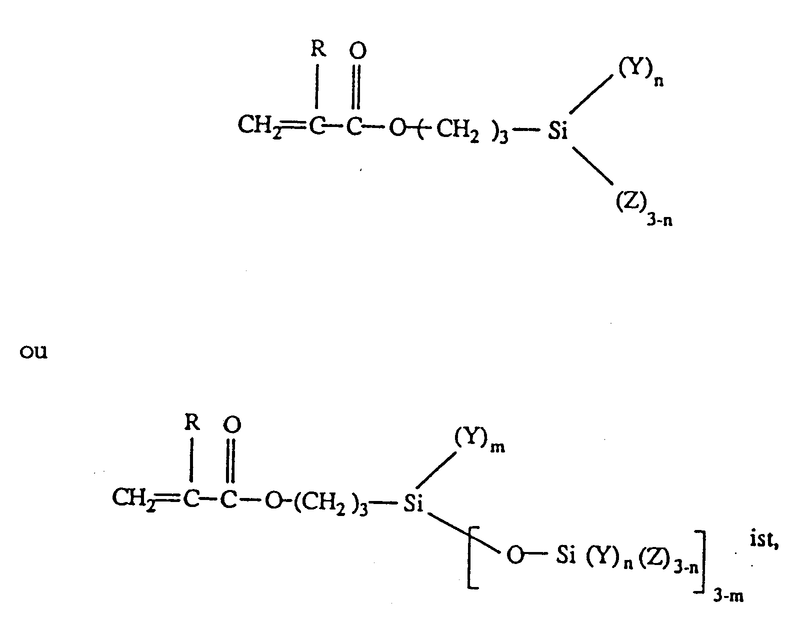 dans laquelle n vaut de 0 à 3, m vaut de 0 à 3, R signifie un hydrogène ou un CH₃, Y signifie un alkyle en C₁-C₈ et Z signifie un alkoxy en C₁-C₈ ou un -OCH₂CH₂OCH₃.

10. Composition selon la revendication 8, **caractérisée** en ce que le composant (a₄) est un dérivé du 2-(2-hydroxyphényl)-benzotriazole ou de la o-hydroxyphényl-s-triazine.

11. Composition selon la revendication 1, **caractérisée** en ce que le composant (b) est un copolymère de plusieurs alkylacrylates ou -méthacrylates, d'un hydroxyalkyl(méth)acrylate, et de l'acide acrylique ou méthacrylique.

12. Composition selon la revendication 1, **caractérisée** en ce que le composant (c) est une résine mélamine et/ou un polyisocyanate.

13. Composition selon la revendication 1, **caractérisée** en ce que le rapport pondéral de (a) à (b) est de 20:80 à 80:20 et le rapport pondéral de (c) à la somme de (a) et (b) est de 3-80 à 100.

14. Composition selon la revendication 1, **caractérisée** en ce que le copolymère (a) contient une amine stériquement encombrée copolymérisable.

15. Utilisation d'une composition selon la revendication 1 en tant qu'agent liant pour des vernis clairs ou des laques pigmentées.

16. Vernis clair ou laque pigmentée, qui contient en tant qu'agent liant une composition selon la revendication 1.

17. Vernis clair ou laque pigmentée selon la revendication 16, qui contient un agent protecteur vis-à-vis de la lumière de la classe des amines stériquement encombrées.

18. Vernis clair ou laque pigmentée selon la revendication 17, qui contient un dérivé de la 2,2,6,6-tétraméthylpipéridine.

19. Film de laque durcie, obtenu par durcissement d'une laque, qui contient en tant qu'agent liant une composition selon la revendication 1.
